# EUROPEAN PATENT APPLICATION

(11) **EP 4 368 362 A1**
(43) Date of publication of application: **15.05.2024**
(21) Application number: 22206283.8
(22) Date of filing: 09.11.2022
(51) Int. Cl.: B28B 7/06, B28B 7/26, B28B 7/34, B28B 23/00, B29D 11/00, E04C 2/04, E04C 2/54, F21S 10/00, F21V 8/00, G02B 6/08, G09F 9/305

(54) **LIGHTSTONE CASTING SYSTEM**

(71) Applicant: Conlite ApS, 5631 Ebberup (DK)
(72) Inventor: JACOBSEN, Jørgen Bo, 5631 Ebberup (DK)
(74) Representative: Patrade A/S

(57) **Abstract**

The present invention relates to a casting system (100) for casting one or more stones (30) embedded with one or more optical fibres (40), said casting system (100) comprising one or more moulds (10) arranged in a casting frame (20), one or more holding means (50) adapted for holding the optical fibres (40) at a first end (42) wherein each mould (10) comprises an inner surface (16) and is adapted for holding a second end (44) of the one or more optical fibres (40)

The present invention also relates to a method of using such a casting system (100) for casting one or more stones (30) embedded with one or more optical fibres (40).

## Description

### Field of the Invention

The present invention relates to a casting system for casting one or more stones embedded with one or more optical fibres, said casting system comprising one or more moulds arranged in a casting frame, one or more holding means adapted for holding the optical fibres at a first end wherein each mould comprises an inner surface and is adapted for holding a second end of the one or more optical fibres.

The present invention also relates to a method of using such a casting system for casting one or more stones embedded with one or more optical fibres.

### Background of the Invention

Designing and producing stones with embedded lighting pose several challenges due to the varying design demands of the stones' shape and size and the lighting design, the required construction strength of the stones and the process of embedding the light source or fixture into the stones.

Typically, stones with embedded lighting are either casted with hollow space, slots and/or channels inside the stones adapted for arranging a light source and wires into the hollow areas after hardening of the stone, or a casted stone will have said space, slots and/or channels machined into the casted stone.

Using a casting system adapted for creating hollow space, slots and/or channels inside the stone can be a rather costly solution, due to the need of a mould, which must be redesigned and replaced when a new design of the lighting design is to be produced.

Casting a stone and then machining hollow space, slots and/or channels into the stone is both a difficult and lengthy manufacturing process and costly solution, however it offers a higher degree of flexibility for new lighting design, compared to the former method.

### Object of the Invention

One objective of the present disclosure is to achieve a casting system for casting stones wherein lighting is embedded in the stone during the casting process.

One objective is to provide a casting system which provides a time and cost-efficient casting process for casting said stones with embedded lighting.

Further objectives include providing a casting system adaptable for many different forms and designs of stones with embedded lighting, where the lighting design may easily be adapted without adapting or interchanging the entire mould.

One objective is to provide a method for casting stones with embedded lighting.

### Description of the Invention

One objective of the invention is achieved by a casting system for casting one or more stones embedded with one or more optical fibres.

The casting system comprises one or more moulds. The one or more moulds may be arranged in a casting frame.

The casting system may comprise one or more holding means. The one or more holding means may be adapted for holding the optical fibres at a first end.

Each mould comprises an inner surface. Each mould is adapted for holding a second end of the one or more optical fibres.

The one or more moulds are made of a resilient material.

One effect of the casting system may be that all optical fibres held by the mould and the casting means are held throughout a casting process. Thus, it is ensured that any first end of the optical fibres is visible at any given surface of the casted stone.

One effect of the casting frame may be that it provides stability to the mould. Thereby, it is ensured that the mould is held in place during casting and the correct shape of the casted stone is obtained.

One effect of the casting system may be that only the mould is to be modified or switched to cast a stone with a different size and/or shape.

One effect of the casting frame may also be that it can be used for a wide range of moulds.

One effect of the resilient material of the mould may be that it may easily be separated from the casted stone and the casting frame, thus enabling the same mould to be re-used for casting a multitude of stones.

One further effect of the mould may be that the same mould can be re-used for casting a stone with a wide range of different optical fibres patterns.

One effect of the holding means may be that it may collect all optical fibres into an optical fibre bundle. An advantageous effect of collecting optical fibres into an optical fibre bundle may be that illuminating all optical fibres is simplified.

The casting frame may be configured to hold any number of moulds. The casting system may be configured to produce a stone in any arbitrary shape. The stones may be used in construction surfaces including but not limited to walls, pavement, flooring, ceiling, roofing, fencing, roadway, or ornamental stones. The term stone may comprise the following exemplary terms: bricks, tiles, slate, stone masonry, cinder or concrete block, and slabs.

In one embodiment of the casting system, the resilient material of the mould may have a shore hardness in the range from 20 to 30, from 22 to 28 or from 25 to 27.

One effect of the resilient material's shore hardness may be that the mould is durable to withstand the wear of casting at least 1000 stones.

In one embodiment of the casting system, the one or more moulds may comprise one or more perforated holes adapted for holding the second end of the one or more optical fibres.

The perforated holes may be configured to penetrate through a portion or the entirety of the resilient material of the mould.

The holes may be arranged in an arbitrary pattern on the inner surface of the mould.

One effect of the resilient material of the mould may be that any vacant hole not occupied by optical fibres remains closed during casting. Thus, a casting material does not pour into any vacant holes. A further effect of the casting system is that any number of the perforated holes in a mould may be used to create a plurality of different lighting patterns using the same mould.

The holes are further adapted for holding the second end of the optical fibres. One advantage of holding the optical fibres inside the resilient material of the mould is that once casted, the optical fibres will at least be visible at the surface of the casted stone.

The casting material may comprise cement, concrete, asphalt, composites of one or more polymers, stone, and/or fibers, or any comparable materials suitable for casting stones or an object comprising materials like stone.

In one embodiment of the casting system, the one or more optical fibres may have a diameter in the range from 0.50 mm to 3 mm, from 0.75 mm to 2 mm or from 0.75 mm to 1 mm.

One effect of varying the diameter of the optical fibres may be that regardless of the chosen size of the optical fibres, the perforated holes in the mould can hold the fibres during the casting process. Likewise, regardless of the chosen size of the optical fibres, the holding means can hold one or more optical fibres of varying size.

One effect of varying the diameter of multiple optical fibres is the light output from the stone and aesthetic look of the finished stone. Especially an arbitrary number of optical fibres and one or more different fibre diameters may be used to form different patterns and shapes on the surface of the stone, including but not limited to numbers, letters, emojis and/or other ornamental design.

In one embodiment of the casting system, the one or more holding means may be adapted for creating one or more recesses in the casted stone.

In one embodiment of the casting system, the one or more holding means may be adapted for receiving and holding the first end of the one or more optical fibres.

An effect of creating one or more recesses in the casted stone is that the space within the recess may be used to hold a light source adapted for illuminating the optical fibres embedded in the stone.

The holding means may be configured to sit permanently in the recess in the casted stone, or it may be removed post hardening.

In a further embodiment of the casting system, the holding means may be configured in a plurality of different shapes, including but not limited to a triangular prism, cube, dome, pyramid, cylinder, or any aforementioned shape either truncated or halved. An effect of configuring the holding means in any of these three-dimensional shapes is that the holding means may be extracted from the casted stone after hardening the casting material.

In a further embodiment of the casting system, multiple holding means may be placed in one mould, and optical fibre bundles may be held by each holding means, thus enabling optical fibres in each holding means to be illuminated individually.

In one embodiment of the casting system, the casting frame may comprise multiple frame walls. At least one of the frame walls is adapted for being separable from the remaining frame wall(s).

In one embodiment of the casting system, the one or more holding means are adapted for being mounted on any one of the frame walls.

One effect arising from separating at least one wall from the casting frame, is a simplified way to extract the mould and casted stone from the casting frame post hardening.

One effect arising from adapting the holding means for being mounted on any one of the frame walls is that the holding means is held in the correct place throughout the casting process.

One further affect may be that the holding means may be separated from the casted stone post hardening.

The casting system can be configured to hold a mould of any shape, including but not limited to a cuboid, truncated cube, octahedron, dome, pyramid, sphere, cone, cylinder, or various prisms.

In one embodiment of the casting system, one or more light sources may be arranged in the holding means.

In one embodiment of the casting system the one or more light sources may be configured for emitting light into the first end of the one or more optical fibres.

One effect of the light sources arranged in the holding means is that the light is emitted directly into the first end of the optical fibres. Thus, the light fibres are optimally illuminated by the light sources.

The light source may be selected from any light-emitting sources such as but not limited to incandescent, luminescent, discharge or electroluminescence.

The light source may be configured to be dimmable by a control unit, thus enabling the intensity (brightness) of the emitted light to be increased and decreased incrementally. The light source may comprise the control unit arranged in e.g. a chip-on-board configuration, it may reside on a printed circuit board in proximity of the light source, or externally from the stone.

The one or more light sources may be configured to be powered and controlled by wires. Multiple light sources may be connected by wires in series or parallel, thus optimising the number of wires and control units required to drive a plurality of light sources.

In one further embodiment of the casting system, a battery pack is placed in the holding means and powers the control unit and/or the light source. The holding means and battery pack may be configured to have an opening accessible when the stone is arranged in a permanent installation.

The one or more control units may be configured to comprise a radio receiver for receiving control signals from a transmitter unit, thereby enabling easy control of the light source remotely, which is useful for stones installed in surfaces such as but not limited to walls, floors, or pillars where the control unit or wires are not easily accessible.

In one embodiment of the casting system, the one or more holding means may comprise a holding means opening. The holding means opening may be configured for receiving and holding the first end of the one or more optical fibres.

The holding means opening may be configured for receiving and holding one or more removeable collection tubes. The collection tubes may be adapted for receiving and holding the first end of the one or more optical fibres.

One effect of the holding means opening and the collection tube is to provide an easy process of collecting one or more optical fibres into a bundle of optical fibres. The holding means opening may also provide an opening in the casted stone, providing an outlet for wires.

In a further embodiment of the casting system comprising a collection tube, the one or more removeable collection tubes may be adapted to interlock with one or more light source tubes.

The one or more light source tubes may comprise the one or more light sources. The light sources may be arranged inside the light source tubes. The one or more light sources arranged inside the light source tubes may be arranged to emit light into the one or more optical fibres when the one or more collection tubes are interlocked with the one or more light source tubes.

One effect of arranging the light source inside the light source tube and mating the collection tube and light source tube is that the light source may optimally illuminate all optical fibres held in the collection tube.

One further effect of arranging the optical fibres in a collection tube and mating said collection tube with a light source tube is that the optical fibres are only illuminated by the light source arranged in the light source tube.

The interlocking mechanism may in one embodiment be achieved by configuring the collection tube to comprise a male interface and configuring the light source tube to comprise a female interface.

The one or more collection tubes and/or light source tubes may in one embodiment be configured to be fastened onto a surface of the casted stone or in the recesses formed by the holding means.

In a further embodiment of the casting system comprising a light source tube, the connection between the one or more collection tubes and the one or more light source tubes may be waterproof.

The light source may be embedded in the light source tube with a water-proof seal.

One effect of the water-proof sealing is that the casted stone may be weather-proof, thus ensuring the stones may be used in but not limited to outdoors construction, water fountains, streams, reservoirs, or pools.

In another exemplary embodiment, the control unit and wires may be arranged inside the light source tube with the wires extending out through the second end of the light source tube. The second end of the light source tube is adapted to provide a water-proof sealing.

In a further embodiment of the casting system comprising a light source, the one or more light sources may comprise one or more light-emitting diodes. The one or more light-emitting diodes may be configured to emit one or more colours of light, and/or shift the colour temperature of the light sources.

One effect of providing one or more light-emitting diodes which may emit different colours of light is that the resulting colours of light emitted by the optical fibres may be mixed into a wide range of colours of light.

One effect of shifting the colour temperature of a light is an ability to match the lighting to a specific aesthetic, mood, to match the temperature of the daylight and/or simulate the lighting of a sunrise and/or a sunset.

One further embodiment of the stone embedded with lighting is obtained by providing a light source that may be selected from any light-emitting fixture, including but not limited to a light-emitting diode (LED), a chip-on-board LED, or discharge lamp.

The light source may be configured to emit one or more single colours of light, including but not limited to red, green, blue, white, yellow, magneta, or cyan, or one or more colour filters may be arranged on the light source.

In one further embodiment of stone embedded with lighting, the light source may comprise three LEDs, one red, green, and blue colour. Each LED are dimmable, thus enabling a mixture of light in a wide variety of colours to be emitted from the light source.

In a further embodiment of the stone embedded with lighting, the light source may comprise a fixture which produces an excessive heat as a byproduct. In such an embodiment, the light source tube and/or holding means are configured to transmit and/or spread the excessive heat into the stone. One effect of this heat spreading is that the light fixture is passively cooled and may have a prolonged life span.

One objective of the invention may be achieved with a method of casting stones embedded with one or more optical fibres. The method comprises acts of:
- providing a casting system having one or more moulds arranged in a casting frame. The said moulds comprise an inner surface. The moulds are adapted for holding one or more optical fibres. The one or more moulds are made of a resilient material;
- arranging one or more holding means adapted for holding the optical fibres, in said moulds;
- arranging a first end of the one or more optical fibres in the one or more holding means;
- arranging a second end of the one or more optical fibres into the moulds;
- pouring a casting material into the one or more moulds;
- hardening the casting material in the one or more moulds.

In one aspect the acts of the method may be performed in any given order.

The method may further comprise an optional act of vibrating the casting frame to force the casting material to settle in the moulds.

The act of hardening the casting material may in one embodiment comprise a heating process wherein the casting material is heated to harden the stone.

An embodiment of carrying out the method for casting stones embedded with optical fibres may be achieved by using the casting system disclosed in this specification.

In a further embodiment of the method following the act of hardening the stone, any one of the following acts may be carried out:
- separating at least one frame wall from any other frame walls of the casting frame.
- extracting the one or more moulds from the casting frame.
- extracting the holding means from the casted stone. This act may optionally be performed, in combination with either the act of separating the frame wall or extracting the moulds.
- separating the one or more casted stones from the moulds.

One objective of the invention is achieved by a stone embedded with one or more optical fibres achieved by one or more of the disclosed methods of casting a stone embedded with one or more optical fibres, the methods further may comprise the act of cutting the second end of the one or more optical fibres.

One effect achieved by the act of cutting the second end of the one or more optical fibres is that no optical fibres extend beyond the surface of the casted stone. Thus, the optical fibres will be fully embedded in the casted stone, which is an object of the invention.

In a further embodiment of the method, the first end of the one or more optical fibres or optical fibre bundles in the holding means opening or collection tube may be cut to a matching length.

One effect of cutting the first end of one or more optical fibres or optical fibre bundles is that a light source may emit light into one or more optical fibres or optical fibre bundles evenly. Thus, also ensuring that the collection tube and light source tube may interlock correctly, without jamming optical fibres in the interlocking interface.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.
Figure 1 illustrates one embodiment of a casting system.
Figure 2 illustrates one embodiment of a casted stone with embedded lighting.
Figure 3 illustrates one embodiment of a casting system with a casting frame.
Figure 4 illustrates one embodiment of a casting system with a casting wall separated from a casting frame.
Figure 5 illustrates one embodiment of a collection tube.
Figure 6 illustrates one embodiment of a light source tube.
Figure 7 illustrates one embodiment of carrying out a casting process.

**Detailed Description of the Invention**

| Item number: | Item: |
|---|---|
| 10 | Mould |
| 12 | Hole |
| 16 | Inner surface |
| 18 | Casting material |
| 20 | Casting frame |
| 22 | Frame wall |
| 24 | Mounting means |
| 30 | Stone |
| 32 | Recess |
| 40 | Optical fibre |
| 42 | First end of the optical fibre |
| 44 | Second end of the optical fibre |
| 46 | Optical fibre bundle |
| 48 | Embedded optical fibre |
| 50 | Holding means |
| 52 | Holding means opening |
| 60 | Collection tube |
| 62 | Male connector |
| 70 | Light source tube |
| 80 | Light source |
| 82 | Printed circuit board |
| 90 | Wire |
| 100 | Casting system |
| 200 | Method |
| 210 | Providing |
| 212 | Arranging |
| 220 | Arranging |
| 222 | Arranging |
| 230 | Pouring |
| 234 | Hardening |

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

In the drawings, when a layer, area, element, or plate is referred to as being "on" another layer, area, element, or plate, it may be directly on the other layer, area, element, or plate, or intervening layers, areas, elements, or plates may be present there between. Conversely, when a layer, area, element, or plate is referred to as being "directly on" another layer, area, element, or plate, there are no intervening layers, areas, elements, or plates there between. Further, when a layer, area, element, or plate is referred to as being "below" another layer, area, element, or plate, it may be directly below the other layer, area, element, or plate, or intervening layers, areas, elements, or plates may be present there between. Conversely, when a layer, area, element, or plate is referred to as being "directly below" another layer, area, element, or plate, there are no intervening layers, areas, elements, or plates there between.

The spatially relative terms "lower" or "bottom" and "upper" or "top", "below", "beneath", "less", "above", and the like, may be used herein for ease of description to describe the relationship between one element or component and another element or component as illustrated in the drawings. It will be understood that the spatially relative terms are intended to encompass different orientations of the device in use or operation, in addition to the orientation depicted in the drawings. For example, in the case where a device illustrated in the drawings is turned over, elements described as being on the "lower" side of other elements, or "below" or "beneath" another element would then be oriented on "upper" sides of the other elements, or "above" another element. Accordingly, the illustrative term "below" or "beneath" may include both the "lower" and "upper" orientation positions, depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below, and thus the spatially relative terms may be interpreted differently depending on the orientations described.

Throughout the specification, when an element is referred to as being "connected" to another element, the element is "directly connected" to the other element, or "electrically connected" to the other element with one or more intervening elements interposed there between.

The terminology used herein is for the purpose of describing particular examples only and is not intended to be limiting. As used herein, the singular forms "a," "an," and "the" are intended to include the plural forms, including "at least one," unless the content clearly indicates otherwise. "At least one" is not to be construed as limiting "a" or "an." It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

It will be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Exemplary examples are described herein with reference to cross section illustrations that are schematic illustrations of idealized examples, wherein like reference numerals refer to like elements throughout the specification. As such, variations from the shapes of the illustrations as a result, for example, of manufacturing techniques and/or tolerances, are to be expected. Thus, examples described herein should not be construed as limited to the particular shapes of regions as illustrated herein but are to include deviations in shapes that result, for example, from manufacturing. For example, a region illustrated or described as flat may have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims. Some of the parts which are not associated with the description may not be provided in order to specifically describe exemplary examples of the present disclosure.

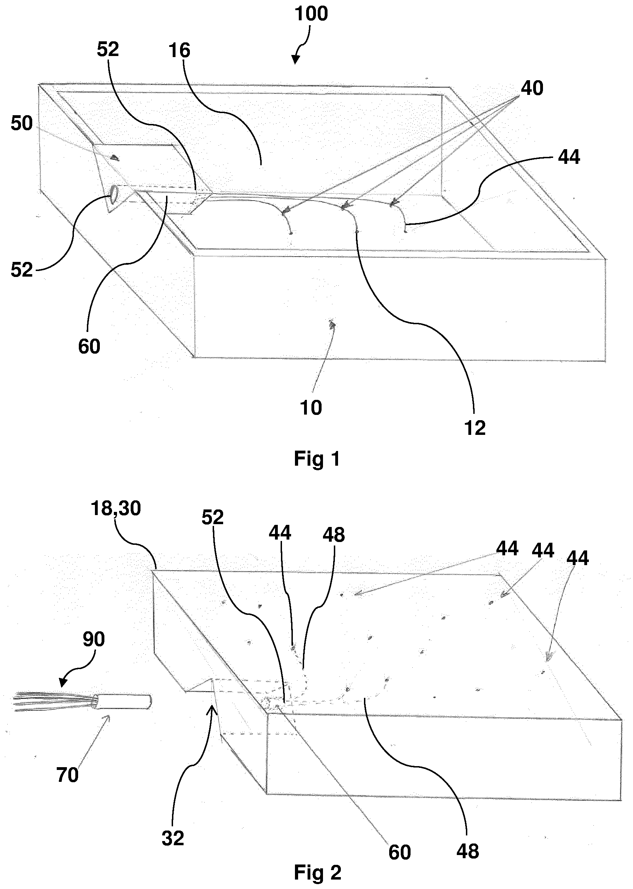

Figure 1 illustrates one embodiment of a casting system 100. The system is suitable for casting one or more stones 30 embedded with one or more optical fibres 40.

The casting system 100 comprising one or more moulds 10 arranged in a casting frame 20.

The casting system further comprises one or more holding means 50. The holding means 50 are adapted for holding the optical fibres 40 at a first end 42.

Each mould 10 comprises an inner surface 16. Each mould 10 is adapted for holding a second end 44 of the one or more optical fibres 40.

The one or more moulds 10 are made of a resilient material. The mould may be obtained from casting said mould around an existing stone, to obtain a mould for casting a duplicate of said stone. The mould may be prepared for holding one or more optical fibres, by penetrating the resilient material of the mould's inner surface 16, thus creating perforated holes in the mould. One or more slots may also be cut in any one surface of the mould, the slots are adapted for receiving one or more holding means 50.

The one or more moulds 10 may comprise one or more perforated holes 12 adapted for holding the second end 44 of the one or more optical fibres 40.

The one or more holding means 50 may be adapted for receiving and holding the first end 42 of the optical fibres 40.

The one or more holding means 50 may comprise a holding means opening 52 for holding the first end 42 of the one or more optical fibres. The one or more holding means 50 may also be adapted for receiving and holding one or more removeable collection tubes 60.

The one or more collection tubes 60 may be adapted for receiving and holding the first end 42 of the one or more optical fibres 40.

Figure 2 illustrates one embodiment of a casted stone 30 with embedded lighting. The casted stone 30 is produced by pouring a casting material 18 into a mould 10 and hardening the material.

The casted stone 30 may have one or more embedded optical fibres 48. The second end 44 of the embedded optical fibres 48 may be just visible on the surface of the casted stone 30.

The holding means 50 may be adapted for creating one or more recesses 32 in the casted stone 30. In one embodiment of the casted stone 30, the one or more holding means 50 may sit permanently in the recesses 32.

The casting system comprising a collection tube, further comprises one or more light source tubes 70. The light source tubes 70 are adapted to interlock with the one or more collection tubes 60.

The light source tube 70 is further arranged with a light source 80 inside the light source tube 70. The light source 80 is arranged to emit light into the one or more optical fibres 40, when the one or more collection tubes 60 are interlocked with the one or more light source tubes 70.

The first end 42 of the one or more embedded optical fibres 48 are arranged in the collection tube 60. The collection tube is arranged inside the recess 32 in the holding means opening 52.

In this embodiment of the casted stone 30, a light source tube 70 is provided.

At the end of the light source tube 70 opposite of the interlocking interface, wires 90 are provided for powering and controlling the one or more light sources 80.

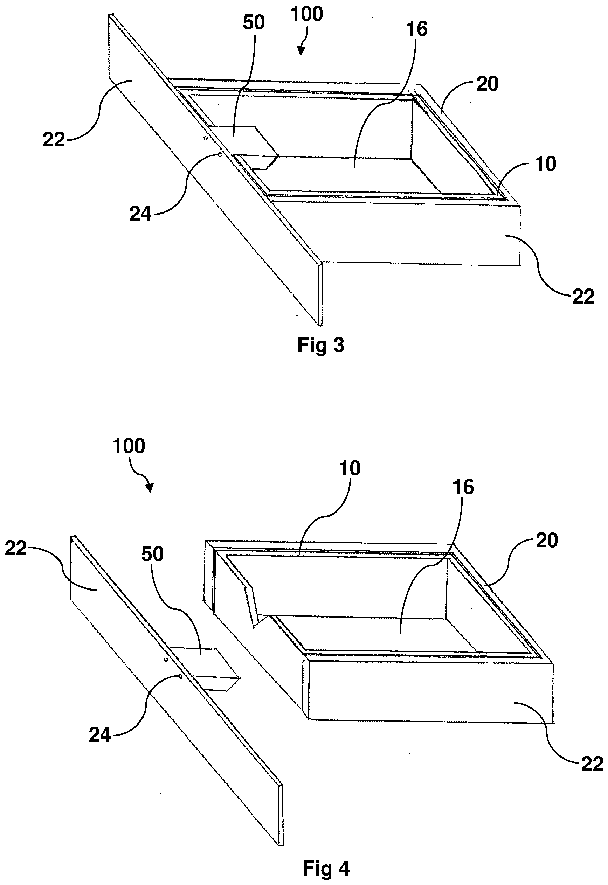

Figure 3 illustrates one embodiment of a casting system 100, where a casting frame 20 surrounds a mould 10. In this embodiment, the casting frame comprises four frame walls 22. In another embodiment, the casting frame 20 may also comprise a bottom plate, arranged below the mould 10.

The casting frame 20 provides rigidity to the mould 10 during casting.

The casting frame 20 may be expanded to comprise additional moulds 10, placed inside a new set of frame walls 22.

In illustrated embodiment, the casting frame 20 is provided with at least one frame wall 22 adapted for being separable from the remaining frame walls 22. In this example, the separable frame wall 22 is the single long wall.

The frame wall 22 is adapted for having mounting means 24 for mounting a holding means 50 onto the frame wall 22. The holding means 50 is adapted for being mounted on any one of the frame walls 22.

Figure 4 illustrates one embodiment of a casting system 100, where a mould 10 and casting frame 20 are provided. In this embodiment the casting frame comprises four frame walls 22.

One frame wall 22 is in this embodiment separated from the mould 10, casting frame 20 and the remaining frame walls 22.

On said separated frame wall 22, the holding means 50 is mounted onto the mounting means 24.

The frame wall 22 may be separated from the casting frame 20, during assembly of the casting system 100, prior to casting a stone 30. The frame wall 22 is mounted on the casting frame 20 during casting, to provide stability to all outer surfaces of the mould 10. After casting and hardening the stone 30 frame wall 22 may be separated from the casting frame 20, in order to extract the mould 10 and stone 30 from the casting frame 20.

The holding means 50 is mounted to any one frame walls 22, in order to hold the holding means 50 exact position throughout the casting process.

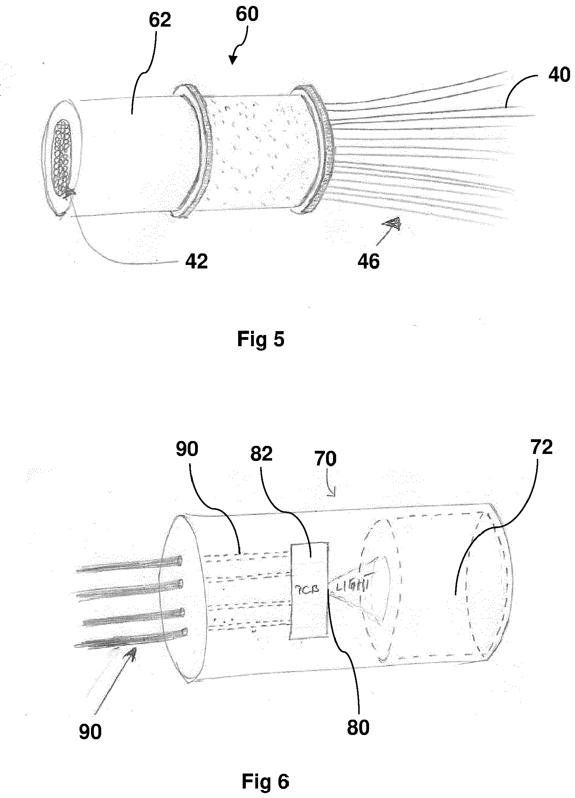

Figure 5 illustrates one embodiment of a collection tube 60. In this embodiment of the collection tube 60, a bundle 46 of optical fibres 40 are held by the collection tube at the first end 42 of the optical fibres.

The collection tube 60 is provided with an interlocking interface. In this embodiment of the collection tube 60, the interlocking interface is configured as a male connector 62. The interlocking interface of the collection tube 60 may be configured to have a sealing gasket for providing a water-proof sealing when interlocked with a light source tube 70.

Figure 6 illustrates one embodiment of a light source tube 70. In this embodiment of the light source tube 70 a light source 80 is arranged inside the light source tube 70. The light source 80 is arranged on a printed circuit board 82.

In this embodiment of the light source tube 70, an interlocking interface is provided. In this embodiment of the light source tube 70, the interlocking interface is configured as a female connector 72.

The interlocking interface of the light source tube 70 may be configured to have a sealing gasket for providing a water-proof sealing when interlocked with a collection tube 60.

The light source 80 is arranged to emit light into optical fibres 40 arranged in a collection tube 60, when the collection tube 60 and light source tube 70 are interlocked.

In one embodiment of the light source 80, a reflector may be provided to utilise all the emitted light output of the light source 80. The reflector may be a truncated cone, surrounding the light source at a first end and the optical fibres 40 at a second end. The diameter of the truncated cone at the first end is smaller than the diameter at the second end. The inner surface of the truncated cone is made in a reflective material, e.g. like a mirror or chrome polished metal.

In this embodiment of the light source tube 70, the light source 80 and printed circuit board 82 is powered and controlled by one or more wires 90.

In another embodiment, the light source 80 and printed circuit board 82 may be powered by a battery pack arranged in the light source tube 70 or separately in the recess 32 in the casted stone 30.

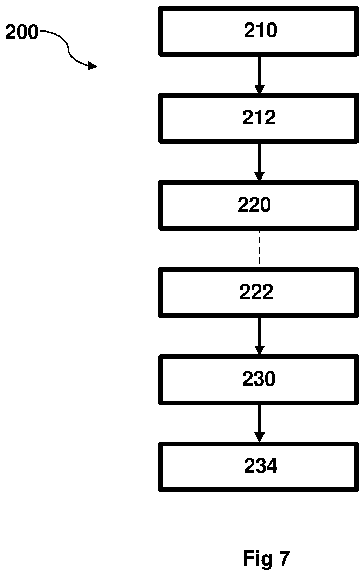

Figure 7 illustrates one embodiment of carrying out the casting process. A method 200 of casting stones 30 embedded with one or more optical fibres 40 is provided. Said method 200 may comprise the acts of:
- providing 210 a casting system having one or more moulds 10 arranged in a casting frame 20. Said mould 10 may be obtained from casting a resilient material around an existing stone which is to be replicated.

The moulds comprise an inner surface 16 and is adapted for holding one or more optical fibres 40. The optical fibres are held by perforated holes 12 in the mould 10.

The one or more moulds 10 are made of a resilient material. The resilient material aids in holding optical fibres in the holes 12, and aids in releasing a casted stone 30 from the mould 10 after hardening.
- arranging 212 one or more holding means 50 adapted for holding the optical fibres 40, in said moulds 10.
- arranging 220 a first end 42 of the one or more optical fibres 40 in the one or more holding means 50.
- arranging 222 a second end 44 of the one or more optical fibres 40 into the moulds 10.

In any embodiment of the method 200, the order of carrying out the two acts of arranging (220 and 222) the one or more optical fibres 40 may be interchanged, as indicated by the dashed line between 220 and 222.
- pouring 230 a casting material 18 into the one or more moulds 10.
- hardening 234 the casting material 18 in the one or more moulds 10.

## Claims

1. A casting system (100) for casting one or more stones (30) embedded with one or more optical fibres (40), said casting system (100) comprising one or more moulds (10) arranged in a casting frame (20), one or more holding means (50) adapted for holding the optical fibres (40) at a first end (42) wherein each mould (10) comprises an inner surface (16) and is adapted for holding a second end (44) of the one or more optical fibres (40) and wherein the one or more moulds (10) are made of a resilient material.

2. The casting system (100) according to claim 1, wherein the resilient material of the mould (10) has a shore hardness in the range from 20 to 30, from 22 to 28 or from 25 to 27.

3. The casting system (100) according to any one of claims 1 or 2, wherein the one or more moulds (10) comprise one or more perforated holes (12) adapted for holding the second end (44) of the one or more optical fibres (40).

4. The casting system (100) according to any one or more of the preceding claims, wherein the one or more optical fibres (40) have a diameter in the range from 0.50 mm to 3 mm, from 0.75 mm to 2 mm or from 0.75 mm to 1 mm.

5. The casting system (100) according to any one or more of the preceding claims, wherein the one or more holding means (50) are adapted for creating one or more recesses (32) in the casted stone (30), and wherein the one or more holding means (50) are adapted for receiving and holding the first end (42) of the one or more optical fibres (40).

6. The casting system (100) according to any one or more of the preceding claims, wherein the casting frame (20) comprises multiple frame walls (22) wherein at least one of the frame walls (22) is adapted for being separable from the remaining frame wall(s) (22), and wherein the one or more holding means (50) are adapted for being mounted on any one of the frame walls (22).

7. The casting system (100) according to one or more of the proceeding claims, wherein one or more light sources (80) are arranged in the holding means (50) and configured for emitting light into the first end (42) of the one or more optical fibres (40).

8. The casting system (100) according to any one or more of the proceeding claims, wherein the one or more holding means (50) comprise a holding means opening (52) for receiving and holding the first end (42) of the one or more optical fibres (40) or for receiving and holding one or more removeable collection tubes (60) adapted for receiving and holding the first end (42) of the one or more optical fibres (40).

9. The casting system (100) according to claim 8, wherein the one or more removeable collection tubes (60) are adapted to interlock with one or more light source tubes (70) with the one or more light sources (80) arranged inside the light source tubes (70) to emit light into the one or more optical fibres (40) when the one or more collection tubes (60) are interlocked with the one or more light source tubes (70).

10. The casting system (100) according to claim 9, wherein the connection between the one or more collection tubes (60) and the one or more light source tubes (70) are water-proof and wherein the light source (80) is embedded in the light source tube (70) with a waterproof seal.

11. The casting system (100) according to claim 7 or 9 or 10, wherein the one or more light sources (80) comprise one or more light-emitting diodes, configured to emit one or more colours of light, and/or shift the colour temperature of the light sources (80).

12. A method (200) of casting stones (30) embedded with one or more optical fibres (40), wherein said method comprising acts of:
- providing (210) a casting system having one or more moulds (10) arranged in a casting frame (20) wherein said moulds comprise an inner surface (16) and is adapted for holding one or more optical fibres (40) and wherein the one or more moulds (10) are made of a resilient material;
- arranging (212) one or more holding means (50) adapted for holding the optical fibres (40), in said moulds (10);
- arranging (220) a first end (42) of the one or more optical fibres (40) in the one or more holding means (50);
- arranging (222) a second end (44) of the one or more optical fibres (40) into the moulds (10);
- pouring (230) a casting material (18) into the one or more moulds (10);
- hardening (234) the casting material (18) in the one or more moulds (10).

13. The method (200) according to claim 12, using the casting system (100) according to anyone of claims 1 to 11.

14. Stone (30) embedded with one or more optical fibres (40) achieved by the method according to claim 12 or 13, further comprising the act of cutting the second end (44) of the one or more optical fibres (40).
